(19) Europäisches Patentamt
European Patent Office
Office européen des brevets

(11) **EP 1 865 678 A1**

(12) **EUROPEAN PATENT APPLICATION**

(43) Date of publication:
**12.12.2007 Bulletin 2007/50**

(51) Int Cl.:
***H04L 27/26*** *(2006.01)*

(21) Application number: **06290746.4**

(22) Date of filing: **09.05.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **Alcatel Lucent**
**75008 Paris (FR)**

(72) Inventor: **Gerlach, Christian, Dr.-Ing.**
**71254 Ditzingen (DE)**

(74) Representative: **Richardt, Markus Albert**
**Patentanwalt**
**Leergasse 11**
**65343 Eltville am Rhein (DE)**

(54) **System and method for separating two OFDM signals**

(57) The invention relates to a method for separating a first OFDM signal from a second OFDM signal, said signals being exchanged in a cellular telecommunication system, the method comprising the following steps:
a) receiving a composite signal which comprises the first signal and the second signal, the first signal and the second signal being associated with different pilot systems,
b) calculating constellation points of a composite signal in a constellation diagram,
c) determining the position of the received composite signal in the constellation diagram,
d) determining a nearest neighbour of the composite signal in the constellation diagram whereby the first signal is separated from the second signal.

Furthermore the invention relates to a system and a computer program product for carrying out said method.

## Fig. 1

**Description**

**Field of the invention**

The invention relates to the field of telecommunication, and more particularly to a system and a method for separating a first electromagnetic signal from a second electromagnetic signal.

**Background**

Usage of OFDM (orthogonal frequency division multiplexing) in wireless cellular telecommunication systems has been considered in the prior art. All cellular systems reuse system resources, e.g. the transmission frequency, such that terminal devices in different but adjacent cells might use the same or similar transmission frequency. The terminal then has to separate OFDM signals it receives. Ignoring transmission diversity, only one signal originates from the serving base station, whereby all other signals can be regarded to stem from interferers. The receiver then has to separate the wanted signal from the interfering signal.

**Summary**

The following description discloses a system, computer software and a method providing a possibility to separate two OFDM signals.
The claimed invention is described by the features of the independent claims. Example embodiments of the claimed invention are described by the features of the dependent claims. It should be emphasized that any reference signs in the claims shall not be construed as limiting the scope of the invention.
An aspect of the claimed invention provides a method for separating a first electromagnetic signal from a second electromagnetic signal. The signals can be signals which are exchanged in a cellular wireless telecommunication system. The signals can thus be signals transmitted between the fixed components of the wireless telecommunication system, e.g. a base station and the mobile parts of the wireless telecommunication system, e.g. a terminal device such as a mobile phone, a laptop or a PDA. The signals are orthogonal frequency division multiplexing (OFDM) signals.
The method comprises a first step of receiving a composite signal, said composite signal comprising the first signal and the second signal, the first signal and the second signal being associated with different pilot systems. A second step consists of calculating constellation points of possible composite signal realizations in a constellation diagram. In most cases all possible realizations will be calculated. In a third step the position of the received composite signal in the constellation diagram is determined. In a fourth step a nearest neighbour of the composite signal in the constellation diagram is determined, whereby the first signal is separated from the second signal.
When using the method the first signal and the second signal can be separated. This allows distinguishing a wanted signal from a major interference contribution and thus allows improving reception conditions. The signal detection is improved by taking the knowledge of the second signal into account. Thereby the bit error rate or block error rate is decreased and the spectral efficiency of the telecommunication system is improved.
The first OFDM signal and the second OFDM signal are associated with different pilot systems. A pilot system, which might also be called pilot pattern or pilot symbol arrangement, is a pattern or arrangement of the pilot symbols among the sub-carriers which carry them. These arrangements of pilot symbols differ in time and/or in the sub-carriers which carry the pilot symbols. The pilot systems of the first signal and the second signal are known when using the method described above.
In operation of the example embodiment, reception means receive a composite signal, the composite signal comprising the first signal and the second signal, the first signal and the second signal being associated with different pilot systems. Calculation means calculate possible constellation points of a composite signal in a constellation diagram, and determine a nearest neighbour of the composite signal in the constellation diagram, thereby separating the first signal from the second signal.
In an example embodiment the first signal and the second signal originate from two cells of said telecommunication system being adjacent to each other. In the alternative the two cells abut on each other. This enables a terminal device to separate two signals originating from the two cells when it is located in the boundary region between these two cells. The first signal might originate from the serving base station serving the first cell, whereas the second signal might originate from a base station serving the second cell. In such a situation the method would enable a terminal device to separate the wanted first signal from the second signal, the second signal representing a major interference contribution.
As mentioned above the pilot systems of the first signal and the second signal are known when using the method. To provide this information another example embodiment allows for receiving this information on the pilot systems prior to receiving the composite signal. In the alternative this information can be provided in an electronic component where it is permanently stored and from where it can be retrieved when using the method.

In another example embodiment a channel transfer function of the first signal and a channel transfer function of the second signal are estimated prior to calculating the constellation points in the constellation diagram. In the alternative the transfer functions are known in another way when using the method. With the channel transfer functions the location of the possible constellation points of a composite signal in the constellation diagram can be calculated. If information on pilot systems is resident in an electronic component this information can be retrieved in order to estimate the channel transfer functions.

In another example embodiment the calculation of possible constellation points comprises the calculation of first and second constellation points. A first constellation point is associated with a first signal, whereby the origin of the constellation diagram is taken as a reference point. This means that the amplitude and the phase of the first constellation point are calculated with the origin of the constellation diagram having an amplitude of zero and the real axis corresponding to a phase of zero. The first constellation points then represent the phase and the amplitude of the first signal. Second constellation points are associated with the second signal, the second signal corresponding to the first signal. The constellation point of the corresponding first signal, i.e. the corresponding first constellation point, is taken as a reference point. The corresponding first constellation point is thus used as if it were the origin of a second constellation diagram in which the locations of second constellation points can be determined. The amplitude and the phase of the second signal are then calculated with respect to the first constellation point in this second constellation diagram.

In another example embodiment the determination of the nearest neighbour comprises calculating the composite signal with trial values of the first signal and with trial values of the second signal until a difference between the measured value and the calculated value reaches a minimum. This is done with the help of the known or estimated channel transfer functions of the first and the second signal.

In another example embodiment determining the nearest neighbour of the point of the composite signal in the constellation diagram consists in determining the second constellation point being closest to the point of the composite signal. In this case the likelihood that the composite signal is the signal mix denoted by the calculated second constellation plus noise and eventually further interference has its maximum.

It is possible to carry out the above mentioned-method as described below in a cellular telecommunication system in which the base stations are not synchronized with each other. In this case the data frames, also called transmission time interval and abbreviated TTI, of the first signal and the data frames of the second signal show a time offset with respect to each other. It is however also possible to carry out the method when the base stations are synchronized with each other.

In another example embodiment the calculation of the second constellation points is modified when the base stations are not synchronized with each other. In this case the calculation takes interference contributions of the second signal in the previous and in the next OFDM symbol into account. This allows a more precise separation of the first signal and the second signal in the case of non-synchronized base stations.

Another aspect of the claimed invention relates to a computer program product. The claimed method can be realized in hardware, software, or a combination of hardware and software. Any kind of computer system - or other apparatus adapted for carrying out the methods described herein - is suited. A typical combination of hardware and software could be a general-purpose computer system with a computer program that, when being loaded and executed, controls the computer system such that it carries out the method described herein. The method can also be embedded in a computer program product, which comprises all the features enabling the implementation of the method described herein, and which - when being loaded in a computer system - is able to carry out this method.

Computer program means or computer program in the present context means any expression, in any language, code or notation, of a set of instructions intended to cause a system having an information processing capability to perform a particular function either directly or after either or both of the following a) conversion to another language, code or notation; b) reproduction in a different material form.

These and other aspects of the claimed invention will be apparent from and elucidated with reference to the example embodiments described hereinafter. It should be noted that the use of reference signs shall not be construed as limiting the scope of the claimed invention.

**Brief description of the drawings**

Figure 1    shows a cellular telecommunication system,

Figure 2    illustrates the possible constellation points of the composite signal,

Figure 3    describes the interference across sub-carriers in the case of asynchronous sources of the first signal and the second signal.

**Detailed description**

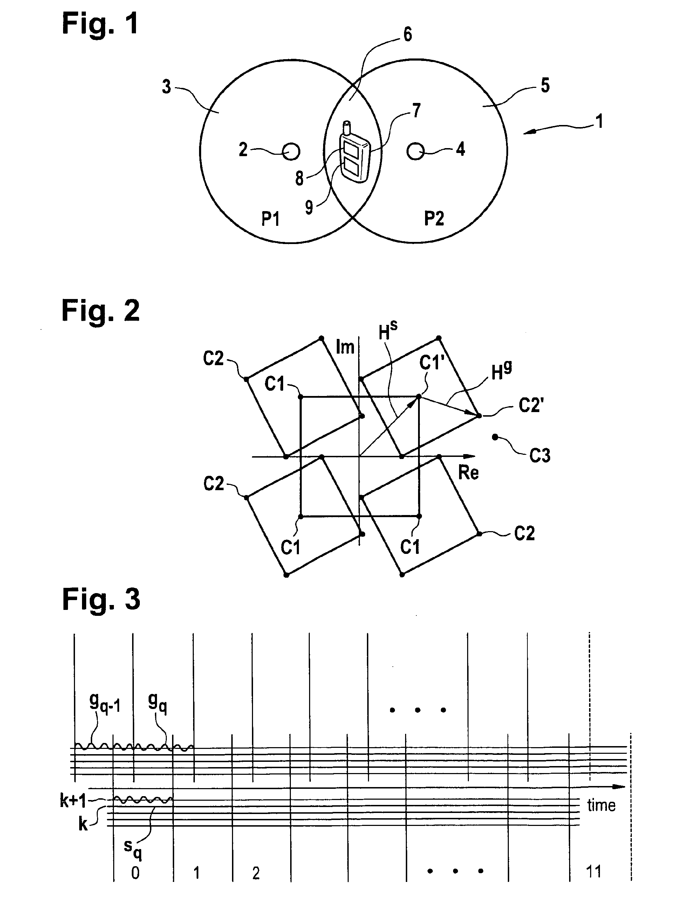

Figure 1 shows a cellular telecommunication system 1 with a first base station 2 serving users in first cell 3 and a second base station 4 serving users in a second cell 5. The area covered by the two base stations 2 and 4 overlap in an overlap region 6. In such a region a terminal device 7, which can be a mobile phone, a notebook, a laptop, a personal digital assistant (PDA) or any other suitable electronic communication component can receive signals from both base stations 2, 4. The base stations 2, 4 and the terminal device 7 are adapted to transmit and receive OFDM (orthogonal frequency division multiplexing) signals.

Terminal device 7 receives signals from both base stations 2, 4. The reception means 8 it uses can be an electronic receiver located in a terminal device 7, and can be an OFDM receiver. The received analogue signal is converted into a digital signal by means of an analogue-to-digital converter which allows using a computational entity 9 for further signal processing. The computational entity includes a microprocessor which can use an internal and/or an external memory unit.

For enabling the terminal 7 to separate these two signals the base stations use different pilot systems. Base station 2 uses a first pilot system P1 and base station 4 uses a second pilot system P2. The two pilot systems P1 and P2 can use different sub-carriers for carrying the pilot symbols.

In operation, the reception means 8 receive the composite signal comprising the first signal and the second signal. As it knows in advance which pilot system is used for them it can determine a first channel transfer function, called $H^s$, associated with the first signal and a second channel transfer function, called $H^g$, associated with the second signal. Obtaining the channel transfer function is carried out by means of channel estimation within the reception means 8.

The computational entity 9 calculates constellation points of a composite signal in a constellation diagram. The constellation diagram is a plot of a complex plane, also called Argand plane, in which the amplitude and the phase of a signal can be plotted. These two quantities are calculated, and may be plotted in the constellation diagram, with respect to two mutually orthogonal axes, namely the real axis, also called in-phase axis, and the imaginary axis, also called quadrature axis. The constellation diagram as such is known to the man skilled in the art and thus does not need further explanation.

Calculating or determining constellation points of a composite signal in a constellation diagram can be carried out in two steps. In a first step constellation points of the first signal are calculated. These are called first constellation points. The first constellation points are calculated from the origin, i.e. the origin of the constellation diagram is taken as a reference point. This means that the origin represents zero amplitude and the real axis zero phase in the constellation diagram as usual.

Each first constellation point represents a possible amplitude and a possible phase of the first signal. The number of first constellation points depends on the modulation type used for the first signal, which in the case of OFDM some types of PSK or QAM are possible. If QPSK is chosen there are four first constellation points arranged on a circle line with the origin of the constellation diagram as the centre. The radius of the circle is governed by the channel transfer function associated with the first signal, whereby the channel transfer function also determines the angular position of the four first constellation points. The same comments apply vice versa for the second constellation points associated with the second signal, whereby the second signal corresponds to the first signal.

In a second step constellation points of the second signal are calculated. In this case the calculation uses the corresponding first constellation point as a reference point. Mathematically speaking this corresponds to a vector addition of the complex-valued vector signals in the constellation diagram. The first vector signal is a vector from the origin of the constellation diagram to the first constellation point, to which a vector corresponding to the second signal is added.

If the second signal is QPSK modulated as well, there are four second constellation points for each first constellation point. They are arranged on a circle line with the corresponding first constellation point as the centre. The radius of the circle is governed by the channel transfer function associated with the second signal, whereby the channel transfer function also determines the angular positions of the four second constellation points.

The result of these calculations is illustrated in Figure 2 having four first constellation points C1 and 16 second constellation points C2. Each quadrant of this constellation diagram shows one first constellation point and its four corresponding second constellation points, which, for reasons of clarity, are connected with straight lines. This diagram assumes that both the first signal and the second signal are QPSK modulated.

Figure 2 also shows the vector addition used with the approach disclosed above. There is a first vector $H^s s$ from the origin to the first constellation point C1' in the first quadrant which represents the first received signal. $s$ denotes the first transmitted signal, or, correspondingly, the complex-valued symbol carried by a sub-carrier. The second vector $H^g g$ starting at C1' represents the second received signal, whereby $g$ denotes the second transmitted signal, or, correspondingly, the complex-valued symbol carried by a sub-carrier. The second constellation points C2' thus correspond to vectors

$$y = H^s s + H^g g \qquad \text{(equation 1)}$$

whereby $H^s s$ can represent a wanted signal and $H^g g$ can represent interference.

Next, the position of the received composite signal in the constellation diagram is determined, treating all other additional signals as AWGN (additive white gaussian noise) noise.

Having determined the position of the received composite signal in the constellation diagram (which is called C3) the second constellation point next to this position C3 can be determined. This is done by identifying a second constellation point C2' having a minimum distance to C3. In this process the distances from C3 to the second constellation points C2 are recorded. The deviating location of C3 relative to C2' is attributed to other interference contributions and noise modelled as AWGN in this approach. The second constellation point thus identified is regarded to be the true constellation point of the composite signal which makes it possible to separate the first signal from the second signal. Further, to calculate the probability of the correctness of this decision in a soft bit calculation or log-likelihood ratio (LLR) calculation, the previously recorded distances of the constellation points are taken into account. If the second signal can be regarded as an unwanted interference contribution only the first signal is used as a wanted signal carrying symbols for communicating with the serving base station.

The above description assumed that the first signal and the second signal stem from two sources being synchronized with each other. In this case the guard interval is not exceeded, such that the situation is not different for different frequencies or other time instances. In case of synchronous base station and thus synchronous interference where the guard interval is not exceeded, the interference is just given by the single carrier QAM symbol $g_q$ of the same frequency k at the same time instance q.

In this case the following equation applies:

$$y_q = H(k)^s{}_q s_q + H(k)^g{}_q g_q \qquad \text{(equation 2)}$$

whereby $H(k)_q{}^g$ is the channel transfer function coefficient of such a component $g_q$ for q = 0,1, ..., S-1. and $H(k)^s{}_q$ is the channel transfer function for the desired signal.

The method disclosed herein can be also used when the signal sources are not synchronized with each other, such that the data symbols of the first signal and the data symbols of the second signal overlap in time. In this case the calculation of the second constellation points takes interference contributions of the second signal in a previous data symbol and in the current data symbol into account.

In the asynchronous case the second signal, which for simplicity will now be regarded to be an interference contribution to the first signal, is composed of multiple components $H_q{}^g g_q$ for each time instant q, for q = 0,1, ..., S-1.

The previous considerations are true for a single pre-selected frequency k. The demodulator in the reception means however, e.g. a FFT demodulator, outputs a complex-valued reception value $y_q(k)$ for each frequency k and each time instant q in a certain frequency pattern. In this case the extraction interval for the serving base station 2, i.e. the base station which outputs the first signal, is looked upon, but without a cyclic prefix.

For ease of notation the complex-valued reception value $y_q(k)$ is written as

$$\bar{\mathbf{y}}_{\mathbf{q}} = \begin{bmatrix} y_q(k+B-1) \\ .. \\ .. \\ y_q(k+1) \\ y_q(k) \end{bmatrix} \qquad \text{(equation 3)}$$

B is the number of frequencies in the considered frequency pattern. This notation groups the reception values of frequencies k that lie adjacent to each other in a frequency band, e.g. lie in a finger of a frequency pattern, to a vector for each time instant q. The same can be done for $s_q$ and $g_q$ yielding $\vec{s}_q$ and $\vec{g}_q$. Further all components of the interfering sub-carrier frequencies above the selected frequency band are denoted by $\vec{g}_q^{\,a}$, and the components of the interfering sub-carrier frequencies below the selected frequency pattern are denoted by $\vec{g}_q^{\,b}$. In general the frequency band of consideration can also be wider than the finger of the considered frequency pattern, but then more interfering symbols have to be detected.

Asynchronous data frames cause a coupling of sub-carriers across frequencies, or in other words a coupling of sub-carrier symbols across frequencies from the previous interfering ODFM symbol, said symbols being carried single sub-carriers. The time relationship and coupling is sketched in figure 3 having a bottom part which plots the first signal of frequency k, k+1 .. versus time in units of OFDM symbols, and having an upper part showing the corresponding second signal, again plotted versus time in units of TTI's. As can be seen, the upper part and the lower part have a time offset representing the asynchronism of the signal sources.

The coupling factors are now gathered in a matrix K' which is a full matrix or is approximately a band matrix. The same is true for the interference of sub-carrier symbols from the next interfering OFDM symbol being described coupling factors being also gathered in a matrix **K.** With this notation the received composite signal is

$$\vec{y}_q = H^s_{\,q}\vec{s}_q + K'H^g_{\,q-1}\vec{g}_{q-1} + K\ H^g_{\,q}\vec{g}_q + K^{a\,\prime}H^g_{\,q-1}\vec{g}^{\,a}_{\,q-1} + K^a H^g_{\,q}\vec{g}^{\,a}_{\,q} +$$
$$K'_{\,b}H^g_{\,q-1}\vec{g}^{\,u}_{\,q-1} + K_b H^g_{\,q}\vec{g}^{\,b}_{\,q}$$

(equation 4)

The matrices $H_q^{\,s}, H_q^{\,g}$ describe the desired and non-desired signal channel transfer function coefficients at time instant q.

The matrices K', K$^{a}$' and K'$_b$ contain the single carrier symbol coupling coefficients for interfering single carrier symbols that lie in time before the desired single carrier symbols. Further, the matrices K, K$^a$ and K$_b$ contain the single carrier symbol coupling coefficients for interfering single carrier symbols that lie in time after the desired single carrier symbols. It is to be noted that matrices that are designated with superscript "a" denote coupling influence from frequencies above the desired single carrier symbols and that matrices that are designated with subscript "b" denote coupling influence from frequencies below the desired single carrier symbols.

Due to the synchronity of the reception of s from the serving base station the matrix $H^s q$ is a diagonal matrix, where the complex single carrier QAM symbols that are sent by the serving base station is denoted $\vec{s}_q$

The system which shall separate the first OFDM signal from a second OFDM signal has reception means for the composite signal. The system has a demodulator, e.g. an FFT demodulator, which outputs a reception vector $\vec{x}_q$ in response to the reception of the composite signal. This reception vector $\vec{x}_q$ contains $\vec{y}_q$ and additive white gaussian noise.

If a maximum likelihood detection or a soft-bit calculation for the received bits with the assumption of white gaussian noise is made the expression

$$\sum_{q=0}^{S-1} \left\| \vec{x}_q - \vec{y}_q \right\|^2$$

(equation 5)

relates to the propability of a path, where S is the number of OFDM symbols in one time interval. For example, a data frame unit that is also referred to as Transmission Time Intervall (TTI) consists of a predefinded number of OFDM symbols, such as 12 or 7 OFDM symbols. A data frame unit can have a length of for example about 2ms. The value of the reception vector is $\vec{x}_q$. When the sum of equation 5 is a minimum the highest probability is achieved that it corresponds to the calculated value of $\vec{y}_q$.

If we assume now that the components of the interfering single carrier frequencies above the frequency band $\vec{g}_q^{\,a}$ considered here and the components of the interfering single carrier frequencies below the frequency band $\vec{g}_q^{\,b}$ can be modelled by white noise for all q the expression of equation 4 becomes

$$\vec{y}_q = H^s{}_q \vec{s}_q + K' H^g{}_{q-1} \vec{g}_{q-1} + K \ H^g{}_q \vec{g}_q \qquad \text{(equation 6).}$$

As a consequence equation 5 becomes

$$\sum_{q=0}^{S-1} \left\| \vec{x}_q - H^s{}_q \vec{s}_q + K' H^g{}_{q-1} \vec{g}_{q-1} + K \ H^g{}_q \vec{g}_q \right\|^2 \qquad \text{(equation 7)}$$

and thus relates to the probability of a path.

The vectors $\vec{x}_q$ are demodulated measurement values and they are thus known. Using trial values of $\vec{s}_q$ and $\vec{g}_q$ the sum can be calculated. New trial values are inserted into equation 7 until the sum reaches a minimum. Having reached the minimum the correct values of $\vec{s}_q$ and $\vec{g}_q$ have been identified, thereby separating the first signal $\vec{s}_q$ from the second signal $\vec{g}_q$.

Comparing equation 2 with equation 7 it can be seen that in the asynchronous case coupling across frequencies comes into play which results in a full matrix rather than a diagonal matrix and further an additional term $K'^{*}H^g{}_{q-1}{}^{*}\vec{g}_{q-1}$ relating to an additional time instance has to be taken into account when separating the first signal from the second signal.

When calculating the sum according to equation 7 the fact is used that the sum is a function of the form

$$f(a,b,c,d,e...z) = f_1(a,b,c) + f_2(c,d,e) + f_3(e.,f,g) + ... + f_n(w,x,y) \qquad \text{(equation 8)}$$

with n being an integer. Using equation 8 reduces the computational burden nicely.

.The vector $\vec{g}_q$ could e.g. function as a state variable. Hence, dynamic programming techniques like Maximum Likelihood Viterbi algorithm can be used to search for the best path or make optimum detection with soft-bit calculation resulting in the searched sent-out symbol vectors $\vec{s}_q$ or their corresponding sent bits for all q.

The result of the calculations is an improved detection due to a decreased bit error rate. This improves the system performance due to an increased spectral efficiency

List of Reference Numerals

| 01 | telecommunication system |
| 02 | base station |
| 03 | cell |
| 04 | base station |
| 05 | cell |
| 06 | overlap region |
| 07 | terminal device |
| 08 | reception means |
| 09 | computational entity |

**Claims**

1.  A method of separating a first OFDM signal from a second OFDM signal, said signals being exchanged in a cellular telecommunication system, the method comprising the following steps:

    a) receiving a composite signal which comprises the first signal and the second signal, the first signal and the second signal being associated with different pilot systems,
    b) calculating constellation points of a composite signal in a constellation diagram,

c) determining the position of the received composite signal in the constellation diagram,

d) determining a nearest neighbour of the composite signal in the constellation diagram whereby the first signal is separated from the second signal.

2. The method of claim 1, wherein the first signal and the second signal originate from two cells of said telecommunication system being adjacent to each other or abut on each other.

3. The method of claim 1 or claim 2, wherein prior to receiving the composite signal information on the pilot systems of at least two cells are received.

4. The method of any preceding claim, wherein prior to calculating the constellation points a channel transfer function of the first signal and a channel transfer function of the second signal are estimated.

5. The method of any preceding claim, wherein information on pilot systems is retrieved from an electronic component in order to estimate the channel transfer functions.

6. The method of any preceding claim, wherein the channel transfer functions are used to calculate the constellation points of the composite signal in a constellation diagram.

7. The method of any preceding claim, wherein the calculation of possible constellation points comprises

   a) the calculation of a first constellation point, the first constellation point being associated with the first signal, whereby the origin of the constellation diagram is taken as a reference point,

   b) the calculation of second constellation points, the second constellation points being associated with the second signal, the second signal corresponding to the first signal, whereby the constellation point of the corresponding first signal is taken as a reference point.

8. The method of any preceding claim, wherein the determination of the nearest neighbour comprises calculating the composite signal with trial values of the first signal and with trial values of the second signal until a difference between the measured value and the calculated value reaches a minimum.

9. The method of any preceding claim, wherein determining the nearest neighbour of the point of the composite signal in the constellation diagram consists in determining the second constellation point being closest to the point of the composite signal.

10. The method of any preceding claim, wherein data symbols of the first signal and data symbols of the second signal show a time offset with respect to each other.

11. The method of any preceding claim, wherein the data symbols of the first signal and the data symbols of the second signal show a time offset with respect to each other, further comprising the steps of

   a) calculating of a first constellation point, the first constellation point being associated with a first signal, whereby the origin of the constellation diagram is taken as a reference point,

   b) calculating of second constellation points, the second constellation points being associated with the second signal, the second signal corresponding to the first signal, whereby the constellation point of the corresponding first signal is taken as a reference point, whereby the calculation takes interference contributions of the second signal with itself in a previous time slot and in the next time slot into account.

12. The method of any preceding claim, wherein the sum of distances is represented in a functional form usable for dynamic programming techniques and further comprising using dynamic programming techniques, such as a maximum likelihood Viterbi algorithm, for searching a best path or for optimum detection with soft-bit calculation.

13. The method of any preceding claim, wherein the distances of at least some of the constellation points to the position of the received composite signal in the constellation diagram are calculated and the probability of the bit decision in a soft bit calculation or log-likelihood ratio calculation is calculated taking into account the distances to these at least some second constellation points.

14. Computer program product, the computer program product comprising a computer readable medium, having thereon computer program code means, when said program is loaded, to make the computer executable for executing the method according to any of the claims 1 to 13.

15. A system for separating a first electromagnetic signal from a second electromagnetic signal, said signals being exchangeable in a cellular telecommunication system, the system comprising:

   a) reception means for receiving a composite signal, the composite signal comprising a first signal and a second signal, the first signal and the second signal being associated with different pilot systems,
   b) calculation means adapted to calculate possible constellation points of a composite signal in a constellation diagram and for determining a nearest neighbour of the composite signal in the constellation diagram.

16. The system according to claim 15, further comprising estimation means for estimating a channel transfer function of the first signal and a channel transfer function of the second signal.

17. The system according to claim 15 or 16, wherein the estimation means are adapted to the estimate the channel transfer functions on the basis the known pilot systems.

18. The system according to any of the claims 15 to 17, wherein the calculation means for calculating possible constellation points in a constellation diagram are configured to

   a) calculate a first constellation point, the first constellation point being associated with a first signal, whereby the origin of the constellation diagram is taken as a reference point,
   b) calculate second constellation points, the second constellation points being associated with the second signal, the second signal corresponding to the first signal, whereby the constellation point of the corresponding first signal is taken as a reference point.

19. The system according to any of the claims 15 to 18 implemented as a base station, a terminal device such as a mobile phone, a laptop or a PDA.

EP 1 865 678 A1

**Fig. 1**

**Fig. 2**

**Fig. 3**

10

European Patent Office

## EUROPEAN SEARCH REPORT

Application Number

EP 06 29 0746

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MASAKI SHIBAHARA, TAKEO FUJII, TAKAHIKO SABA, IWAO SASASE: "Performance Evaluation of Frequency Spread Coding and Frequency Interleaving for OFDM Systems Using Adaptive Co-Channel Interference Canceller"[Online] 17 April 2002 (2002-04-17), pages 1-7, XP002402636 Japan Retrieved from the Internet: URL:http://www2.ing.unipi.it/ew2002/procee dings/082.pdf> [retrieved on 2006-10-11] * abstract * * page 1 - page 4 * ----- | 1-19 | INV. H04L27/26 |
| X | CHANG-JUN AHN ET AL: "Enhancement of MLD for SDM/OFDM using power imbalance of polarization and pre-phase distortion scheme" PERSONAL WIRELESS COMMUNICATIONS, 2005. ICPWC 2005. 2005 IEEE INTERNATIONAL CONFERENCE ON NEW DELHI, INDIA JAN. 23-25, 2005, PISCATAWAY, NJ, USA,IEEE, 23 January 2005 (2005-01-23), pages 104-108, XP010799037 ISBN: 0-7803-8964-6 * abstract * * page 104 * * page 107 - page 108 * ----- -/-- | 1-19 | TECHNICAL FIELDS SEARCHED (IPC) H04L H04Q |

The present search report has been drawn up for all claims

| Place of search | Date of completion of the search | Examiner |
|---|---|---|
| Berlin | 11 October 2006 | GONZALEZ GUTIERREZ |

EPO FORM 1503 03.82 (P04C01)

**European Patent Office**

# EUROPEAN SEARCH REPORT

Application Number

EP 06 29 0746

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | BERANGI R ET AL: "Signal space representation of indirect cochannel interference canceller" VEHICULAR TECHNOLOGY CONFERENCE, 1997, IEEE 47TH PHOENIX, AZ, USA 4-7 MAY 1997, NEW YORK, NY, USA,IEEE, US, vol. 1, 4 May 1997 (1997-05-04), pages 145-149, XP010228767 ISBN: 0-7803-3659-3 * abstract * * the whole document * ----- | 1-19 | |

**TECHNICAL FIELDS SEARCHED (IPC)**

The present search report has been drawn up for all claims

| Place of search | Date of completion of the search | Examiner |
|---|---|---|
| Berlin | 11 October 2006 | GONZALEZ GUTIERREZ |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
...........................................................................................................
& : member of the same patent family, corresponding document

EPO FORM 1503 03.82 (P04C01)